# EUROPEAN PATENT SPECIFICATION

(11) **EP 1 781 954 B1**
(45) Date of publication and mention of the grant of the patent: **08.09.2010**
(21) Application number: 05761616.1
(22) Date of filing: 14.07.2005
(51) Int. Cl.: F16B 7/02, F16B 13/06

(54) **EXPANDING COLLAR FASTENER**
BEFESTIGUNGSELEMENT MIT AUSDEHNBAREM BUND
FIXATION DE COLLIER EXTENSIBLE

(30) Priority: 16.07.2004 GB 0415971
(43) Date of publication of application: 09.05.2007
(73) Proprietor: Croft, Guy Cameron, Unit 3B - Whisby Road Lincoln LN6 3QT (GB)
(72) Inventor: Croft, Guy Cameron, Unit 3B - Whisby Road Lincoln LN6 3QT (GB)
(74) Representative: Watterson, Peer Marten John
(86) International application number: PCT/GB2005/002788
(87) International publication number: WO 2006/008488

(56) References cited:
- DE-A1- 3 220 936
- DE-A1- 4 210 488
- FR-A- 2 767 363
- GB-A- 2 093 517
- US-A- 5 154 558

## Description

The present invention relates to a fastener for anchoring in a hole and, in particular, to a fastener for use in joining components together.

Conventional mechanical engineering joints, for example, designed to fix two components rigidly together, commonly use a threaded bolt or stud, with a nut, or a screw. The components either have holes drilled therein allowing a bolt to be passed through both components and a nut run-up on the thread of the bolt so as to couple the two components together, or a hole is formed in one component, for example a casing, and the hole tapped so as to be able to accept a screw or threaded stud thereby enabling the stud to be coupled to the casing. With a stud, the component to be joined can then be attached to the casing by the use of a nut.

Conventional applications designed to achieve the rigid fixture of a tube by its end to another component require a flange to be welded to the tubing to enable a component to be attached thereto. Alternatively, a component may be attached to the tubing by use of an external clamping arrangement or by through bolting perpendicular to the tube's longitudinal axis. Such arrangements can be cumbersome, weak and time-consuming.

Although these conventional fixing methods for attaching components to one another are well understood, there are well known disadvantages to most of them. These disadvantages include manufacturing or preparation time, bulk, weakening of the material in which the threads, holes or welds are created, and the risk of distortion, fracture, galling and seizure of the threads both in service and when dismantling the components.

An exemplary fastener as disclosed in US 6,270,303, includes an anchor bolt fastener used in the construction industry. The fastener comprises an expansion member and an expansion sleeve. The sleeve is provided with a number of teeth so as to ensure that the sleeve engages with the surface of the hole so as to stop rotation of the sleeve within the hole. The rougher the finish of the hole the easier it is to secure the fastener in place.

FR2767363 discloses an assembly unit for hollow tubes that comprises an internally threaded sleeve, a screw having at least one threaded front portion and a smooth conical rear portion, the large diameter of which is away from the threaded portion, and an internally conical split sleeve, which is cylindrical with an external diameter of substantially the same size as the internal wall of the tube.

DE4210488 discloses a connector for a tubular component. The connector comprises an expandable part, formed in the shape of a sleeve and insertable into the recess, an expanding component with an expanding surface, which cooperates over a wide area with a correspondingly formed surface of the expandable part and, a bolt, which is screwed into an internal threaded section of the expanding component.

It is an object of embodiments of the present invention to provide an improved fastener.

An embodiment of the invention provides a fastener for anchoring in a hole, wherein the fastener comprises (a) an outer expandable collar having a tapered inner surface, (b) an inner expansion member, the expansion member comprising an elongate body having a complementarily-tapered portion for expanding the collar, and (c) means for drawing the expansion member into the collar, wherein the collar is mountable on the expansion member so as to have an inner surface of the collar contactable with the body of the expansion member and an outer surface contactable with the hole, wherein the collar has an elongate slot extending through a peripheral wall thereof from an outer end face of the collar along at least part of the length of the collar, wherein the outer circumferential surface of the collar is substantially smooth, and wherein the tapering of the collar and expansion member has an included angle of 16° to 30°, wherein holes or recesses are provided in the outer end face of the collar for facilitating retraction of the collar from a wall of the hole.

The outer end face of the collar is substantially flat, but has holes or recesses, to enable a tool, which may take a form similar to that of a circlip pliers, to engage the end face so as to grip and squeeze the collar. Use of such a tool will enable the outer surface of the collar to be retracted away from the wall of the hole into which the fastener is anchored, for facilitating removal therefrom.

The expansion member is provided with an anti-rotation member i.e. a lug, for engaging with the slot in the collar. Preferably, the pin or lug is of sufficient dimensions such that it will not fracture under shear load imposed by tightening or cause undue embedding in the collar.

The fastener of embodiments of the present invention thus has a smooth external surface and finds particular application for anchoring in an accurately formed smooth uniform hole, for example in metal or plastics material, which may be tubular, by means of friction only. By having contact over smooth surfaces as opposed to the ridged or ribbed surfaces of known fasteners, the frictional securement of the fastener in the hole can be made robust and with predictable holding strength.

The presence of friction between mating parts can be utilised to achieve good holding strength. When two parts are placed together, the frictional force F at the mating face, which resists the motion of two parts relative to one another, depends upon the normal force R exerted by one part against another perpendicular to the plane of their mating face, which may be gravity or an externally applied force, and the coefficient of friction, µ, between the two parts at the mating face according to the equation F = µ R. The frictional coefficient µ depends upon the surface condition and roughness of the parts. Typically between two steel parts it will have a value of 0.3 - 0.7. When a force is applied to move the parts relative to one another, the 'limiting friction' is the frictional force opposing relative motion just prior to the parts slipping, and for the parts to physically move relative to one another the applied force must exceed the limiting friction.

A high level of surface roughness or surface contours or features generated on one or both parts increases friction for a given normal force, due to the shearing effect of the mating materials at the joint interface. However it is possible to generate very high frictional force between smooth mating surfaces without any need for surface features, by simply applying a very high normal force. The advantage of using smooth surfaces is that disruption to the metal surface is minimised, stress concentrations that would weaken the parts are avoided and manufacturing can be simplified. Moreover, since there is a relative absence of material shear effects, the frictional coefficient can be derived empirically with repeatable accuracy and thus the holding strength can be predictable.

The sleeve of US-A-6270303 is provided with a number of teeth so as to ensure that the sleeve engages with the surface of the hole so as to stop rotation of the sleeve within the hole. The degree of surface interaction between the fastener and the hole is completely indeterminate and this makes accurate computation of the holding strength impossible. Masonry anchors are long compared with the diameter of the outer body and threaded section of the fastener, and in order to oppose rotation of the fastener during tightening and achieve holding strength, grip is required from as many surface teeth or other features as possible. They do not rely on uniformly distributed radial force and resulting friction between two smooth surfaces to obtain holding strength. Moreover reliance is placed on the fastener gripping in the hole without constraint by other means. When the hole is loose they will simply spin during tightening. Their external contours would generate surface stresses or deformations in a mechanical engineering joint in a hole or tube, which may be undesirable in some applications. Anchors of this kind do not have accurate matching tapers between the collar and the expansion member with a high degree of intimate surface contact between them and the importance of generating an even distribution of stress in the hole in the contact region of the collar has not been considered important. Masonry type anchors in particular do not satisfy the demands of predictable holding strength, disassembly or positional accuracy, aspects that are important in the field of mechanical engineering.

The fastener of embodiments of the present invention advantageously comprises a thick section metal or plastics collar of cylindrical section having low surface friction. The surface texture is preferably of good machined, cast or forged finish, with a maximum roughness average of 2.8 to 3.2 micrometers, with a corresponding inner surface and mating surface of the expansion member. Preferably the mating tapers of the collar and expansion member match to within 1°.

Preferably the means for drawing the expansion member into the collar comprises an outer thread and a co-operatively threaded nut or other female threaded tightening device (e.g. handle or wheel) mounted on the threaded section of the expansion member.

The slot preferably extends along the entire length of the collar and has enough clearance between it and the anti-rotation pin or lug of the expansion member to permit assembly of the collar and expansion member, and to permit the collar to be squeezed to reduce it slightly in diameter to insert it into the hole where required. The slot is also provided both to engage with the anti-rotation member of the expansion member so as to prevent its rotation and so as to allow the collar to expand when the expansion member is drawn into the collar.

Preferably, there is also provided a notch, which extends partially through the wall of the collar in order to retain the integrity of the collar as a one-piece part, and may be provided along the full length of the collar, the notch being preferably located diametrically opposite the slot in the collar.

In applications where the collar is relatively stiff, the notch serves to weaken the collar deliberately and thus permit easy expansion during tightening and contraction during removal.

In order to suit a range of installations, the collar, in its uninstalled state, need not be a tight fit in the hole in the parent metal component or tube bore. Normally a loose fitting smooth collar would spin during tightening of the nut on the expansion member. However the mating tapers of collar and expansion member, and the collar outer face surface condition are designed to ensure that a component of frictional force is generated between the collar outer face and the counterface. This generates a compressive load in the counterface so in any given application materials will be chosen to be of such a type as to prevent undue embedding and deformation between the collar and counterface. Provided that the metal component or tube into which the fastener is fitted and the counterface are both constrained during tightening, the friction between the outer end face of the collar and the counterface as the expansion member is drawn through the collar will prevent any tendency for the collar to spin before it is secured in the hole.

According to another embodiment of the present invention there is provided a method of both securing a fastener in a hole, but at the same time ensuring straightforward removal, the fastener in accordance with either of the two proceeding embodiments of the present invention, whereby the fastener is removable from the hole by engagement with the outer end surface thereof subsequent to retraction of the collar away from a wall thereof.

Thus, there is provided a fastener, designed to retain one part to another or to a tube, by utilising purely the effect of linearly distributed frictional force of the outer diameter of the expandable collar against the wall of a hole or tube bore, wherein the frictional force and thus holding strength is optimised by design of the taper angles and metal surface conditions of expansion member and collar and is accurately computable.

Aspects of the invention are set out in the accompanying claims.

A fastener and its method of operation, in accordance with embodiments of the present invention, will now be described, by way of example, with reference to the accompanying drawings in which:
Figure 1A and 1B are schematic illustrations of collar of a fastener in end view and side view respectively, prior to assembly, in accordance with an embodiment of the present invention;
Figure 1C and 1D are schematic illustrations of an expansion member of the fastener in side view and end view respectively;
Figures 1E and 1F are schematic illustrations of the collar fitted to the expansion member to form the fastener, in side and end view respectively;
Figures 2A to 2D are schematic part-sectioned illustrations of the fastener assembled to a solid metal component;
Figures 3A and 3B are schematic illustrations of the fastener fitted to tube without (Figure 3A) and with (Figure 3B) a reinforcing collar;
Figure 4A and 4B are schematic illustrations of a fastener fitted in a tube with a thrust nut;
Figures 5A and 5B are schematic illustrations of a fastener with a thread fixed into the tube and fitted to a node joint;
Figure 6 is a schematic illustration of a fastener fitted to a tube with a long-bodied thrust nut; and
Figures 7A and 7B are schematic illustrations of a fastener fixed to plate glass.

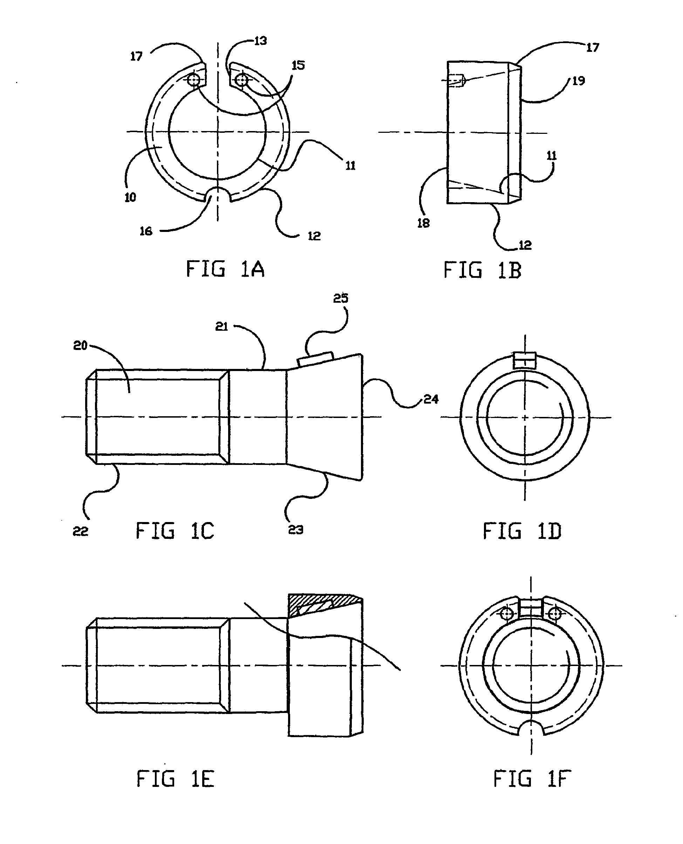

Referring to Figures 1A to 1F, there is provided a generally cylindrical fastener comprising an expandable collar 10 and an expansion member 20. The expansion member 20 comprises an elongate body 21 having an externally threaded portion 22 and a tapered head 23, which increases in diameter in a direction towards an inner end 24 of the expansion member 20 and is provided so as to expand the collar 10 when the head is drawn into the collar 10.

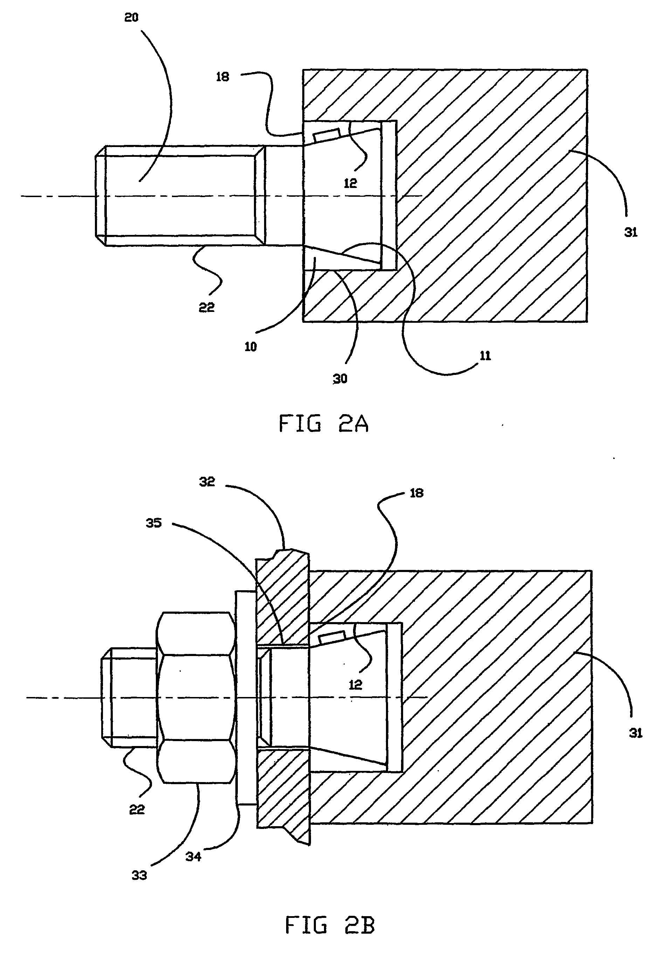

The collar 10 is mountable on the expansion member 20 (as shown in figure 1E and 1F) so as to have at least 80 percent of the diagonal length of the tapered bore 11 in contact with the tapered head 23 of the expansion member 20 and an outer diameter 12 of the collar 10 in contact with the wall of a hole 30, as illustrated in Figure 2A and 2B. The collar 10 is provided with an elongate anti-rotation slot 13 that extends through the wall of the collar 10 and extends along the entire length of the collar 10.

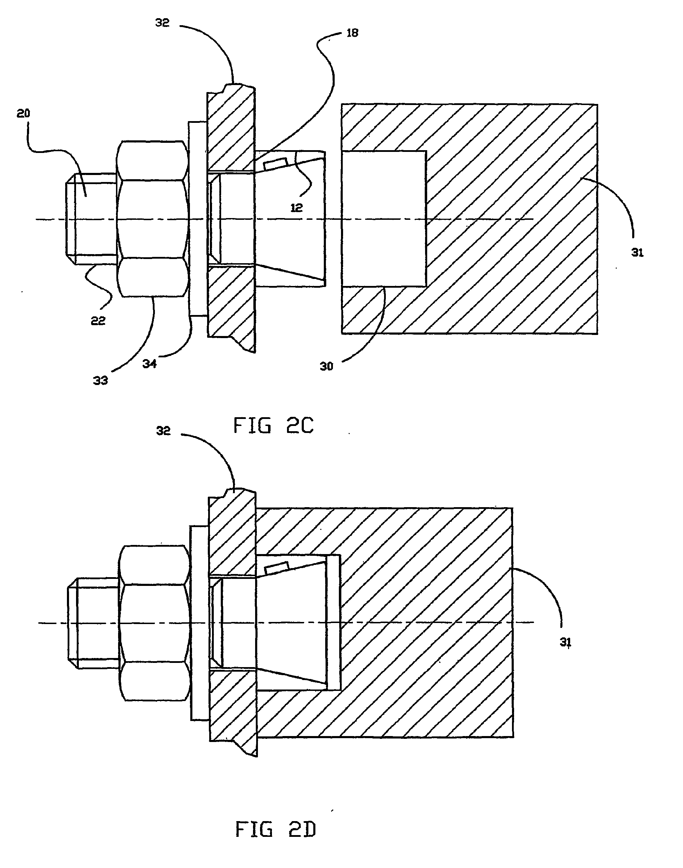

In addition, the collar 10 is provided with two recesses or holes 15 in its outer end face 18, one located adjacent each respective side of the slot 13. The recesses 15 are provided so that a tool, which may be a form of pliers can engage with them to contract the collar inwardly. Use of such a tool will free the outer diameter 12 of the collar from the wall of a hole so as to permit removal of the collar 10 from the hole 30 or tube bore 41, as shown in Figures 2 to 4.

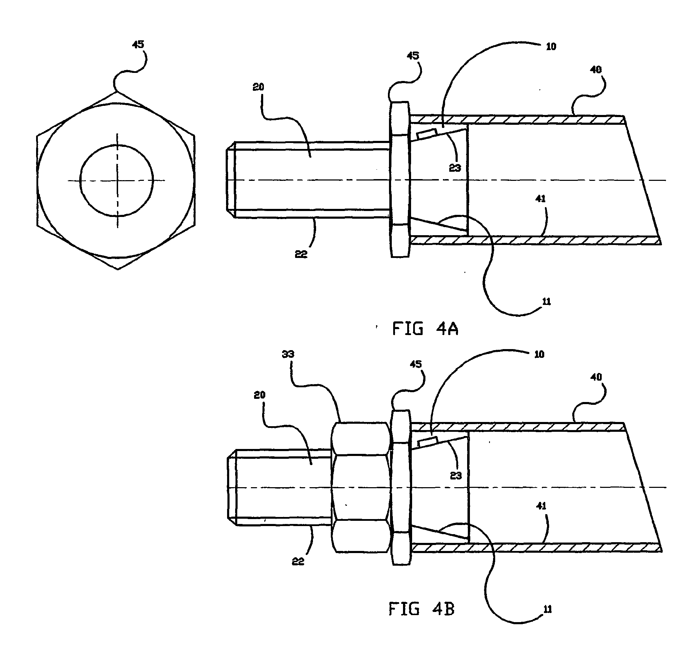

The fastener is designed for use primarily, but not exclusively, in a metal body where the hole into which the fastener is to be fitted is formed uniformly cylindrical and smooth so as to permit close surface contact and thus high friction with the outer diameter 12 of the collar without any need for ribbing or other holding features. The outer face 18 of the collar 10 is flat and accurately perpendicular to the longitudinal axis of the collar, or relatively large surface area, and free of surface features apart from the holes or recesses 15. The outer end face 18 of the collar is designed to bear in close contact with a counterface 32, as shown in Figure 2B, or a thrust nut 45 Figure 4A, the counterface material being required to be also flat and of surface condition such that friction can be generated between the outer face of the collar and counterface.

The expansion member 20 is formed as a machined part or forging in metal. The collar 10 is made from machined or cast metal or plastic, and is not necessarily the same metal material as the expansion member 20.

The materials and sizes of the expansion member 20 and the collar 10 are chosen so as to provide the required strength and metallurgical properties to suit the working environment in which the fastener is to be used as well as for the forces that are to be applied to the fastener and adjoined parts when in use. The expansion member 20 will generally be of a material (or material condition) as strong as or stronger than the collar since the collar 10 must be expanded fractionally to fit closely into the hole or tube bore without distorting occurring in the expansion member 20.

The collar 10 has a uniform taper along the full length of its bore 11 of between 8° and 15° with respect to the longitudinal axis, that is to say of between 16 and 30 degrees of included angle, depending on the application. This range of angles permits easy manufacturing by various methods and also gives an optimum distribution of friction radially of the collar against the wall of a hole and of the outer end face of the collar longitudinally against a counterface and will be the same on collar and expansion member to within one degree of angle. The terms inner end and outer end correspond to the ends of the collar when located in the hole or tube bore.

The slot 13, which extends along the entire length of the collar, enables the collar to expand freely when the head of the expansion member is drawn into it. The slot 13 is also provided so as to be able to receive a pin or lug 25 located on the head of the expansion member. The pin 25 and slot 13 interact with each other so as to prevent the expansion member 20 from rotating with respect to the collar when a nut is run up the body of the expansion member.

Depending on the stiffness and size of the collar 10 it may also be provided with a notch 16, which is located diametrically opposite the slot 13. The notch 16 extends partially through the wall of the collar and may extend along the full length of the collar. The provision of the notch 16 reduces the force required to be exerted by the expansion member 20 on the collar to achieve close contact with the wall of the hole or tube bore and also reduces the force required to be exerted by a tool on the recesses or holes 15 so as to contract the collar on disassembly of the fastener from within the hole or tube bore. During tightening the material may fracture along the notch 16 due to high stress in that section but this will not affect the functionality of the fastener.

In a embodiment, referring to figure 1B, to ease entry of the collar into the hole or tube bore the collar is provided with a chamfered or radiused edge 17 on the inner face 19 of the collar.

In a further embodiment, a low friction coating or treatment may be applied to the tapered bore 11 of the collar 10 and to the tapered head 23 of the expansion member. Reducing the friction between the mating tapers by this method will generate greater radial and longitudinal forces in the collar for a given level of tightening of the nut.

Referring to Figures 1E and 1F, in use, an assembled expanding collar fastener consists of an expansion member 20 inserted into a collar 10 so that so that the pin or lug 25 engages with the slot 13, the tapered inner bore 11 of the collar being engaged closely along most of its length with the tapered head 23 of the expansion member.

Referring to Figure 2A, then, if the collar diameter is of such a dimension that it is a tight fit in the hole 30 in a component 31 to which a part is to be joined, the assembled fastener may be pushed into the cylindrical hole 30 in a component 31 leaving the threaded portion 22 outboard of the hole. The initial friction of the collar outer diameter 12 against the wall of the hole will prevent it from spinning during tightening.

Referring to Figure 2B a second component (or counterface) 32 with a hole 35 formed in it that is to be joined to the first component 31 is then mounted onto the threaded section 22 of the expansion member, and a nut or similar female threaded device (e.g. handle or wheel) 33 fitted (with washer 34 if required) and run up the threaded section so as to pull the outer face of the collar 18 into hard contact with the counterface 32 and force the outer diameter of the collar 12 against the wall of the hole. Concurrently with the expansion of the collar the frictional force of the wide outer end face 18 of the collar acts against the counterface and prevents any tendency of the fastener to spin when the nut is secured. The hole in the counterface must be sufficiently large to give a clearance with and so prevent binding with the tapered section of the expansion member.

The level of holding strength of components 32 to 31 one to another as represented by Fig 2C and 2D is linearly dependent on the friction of the outer diameter 12 of the collar against the wall of the hole 30 according to the formula F = µ R, where R is the force normal (perpendicular) to the plane of the mating tapers. Normal force R is a linear function of the longitudinal preload created in the expansion member in the region between the nut and the mating tapers by tightening of the nut 33.

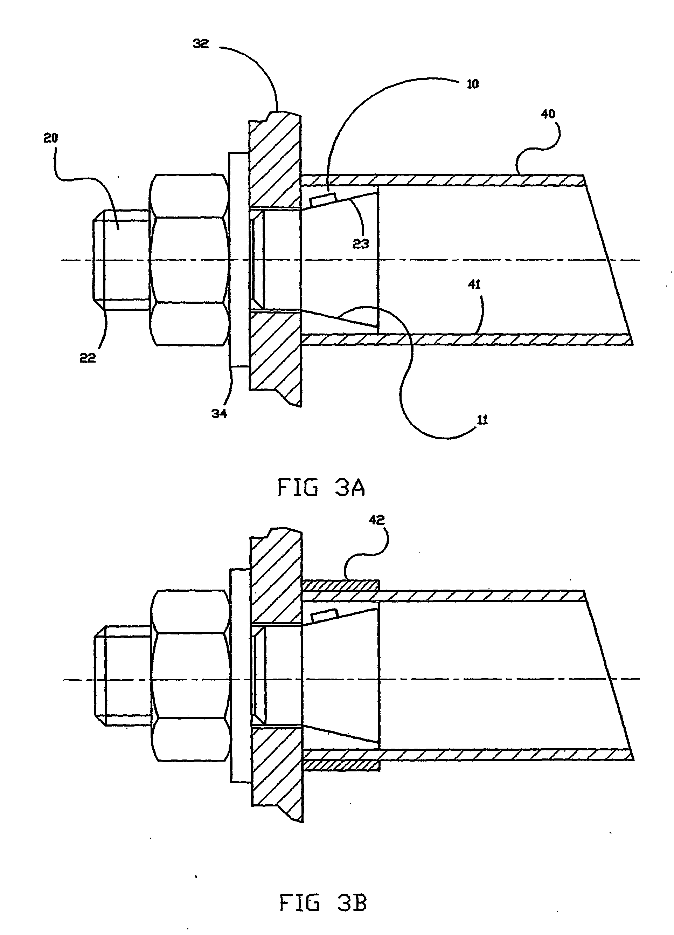

Referring to Figure 2C and 2D, if the fastener is of fractionally smaller diameter than the hole and thus a loose fit in the hole, it is fitted first to the counterface 32 by inserting the threaded end 22 of the expansion member through the hole in the counterface 32 and a nut or similar female threaded means fitted for tightening and washer 34 (if required) fitted. The size of the outer diameter 12 of the collar can now be increased by restraining the collar to prevent it from spinning and then tightening the nut fractionally, this draws the head of the expansion member into the collar until the outer end face of the collar 18 is hard contact with the counter face. When the friction of the outer end face of the collar 18 is sufficient to prevent the collar from spinning it will no longer require restraint and the nut can be tightened still further to achieve the collar diameter required. The assembled fastener can then be pushed into the hole 30 in the first component 31 and secured in place. The fastener may be fitted by similar means to that described above and used in a tube 40 of uniform cylindrical bore 41 as shown in Figure 3A to join the tube to a counterface 32, and additionally a close-fitting cylindrical restraining collar 42 may also be fitted to the tube to prevent it from bursting under the hoop stress created by the expansion of the collar.

Referring to Fig 4A and 4B, where it is required to fix the fastener in a tube so that the exposed thread 22 is held rigidly in place outboard of the tube in order to join the tube to another threaded part, a thrust nut 45 of preferably hexagonal outer body with a central hole can be fitted over the threaded section 22 of the expansion member between the end of the tube and the securing nut 33 thus forming an artificial counterface. Provided that the tube and thrust nut are restrained during tightening of nut 33 the fastener can be secured rigidly in the tube.

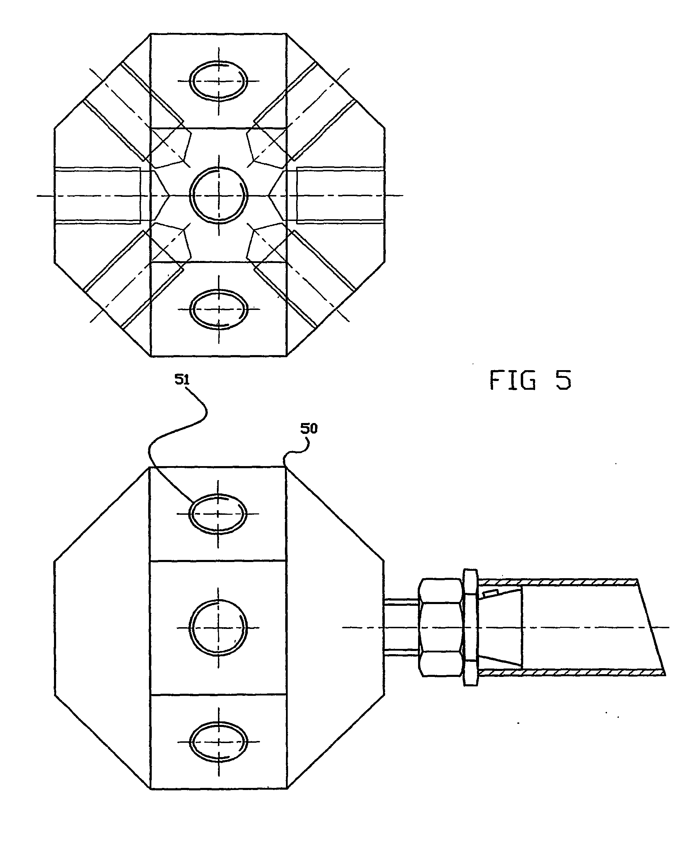

Figure 5 shows a tube fitted typically to a polygonal node joint 50 with female threads 51 on its outer surfaces. A tube with the fastener thus affixed may then be screwed to such a node joint. The fastener may be thus be used to create a structural body from tubing in a far simpler way than hitherto possible.

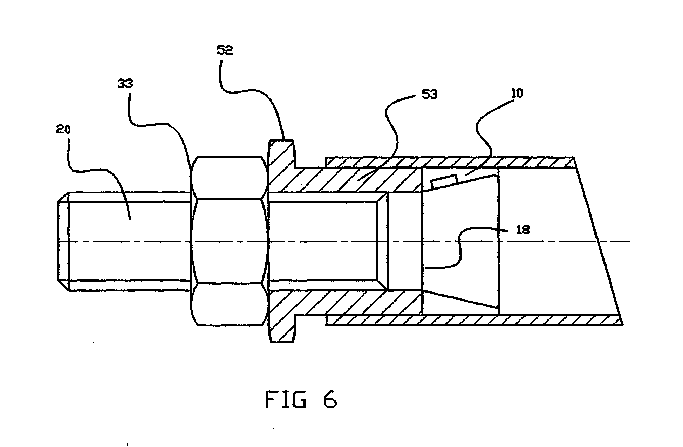

Since the thrust nut acts as an artificial counterface it may take the form of that shown in Fig 6 where an extended or long-bodied thrust nut 52 has a long hollow cylindrical body 53 which can penetrate deep into the tube and also an outboard hexagonal section for tightening, thus placing the effective counterface away from the tube end. The outer end face 18 of the collar 10 is pulled into hard contact with the long-bodied thrust nut by tightening the securing nut 33 against the hexagonal body of the thrust nut 52. The long-bodied thrust washer allows the fastener to accommodate deviations in specified tube length in a given structure.

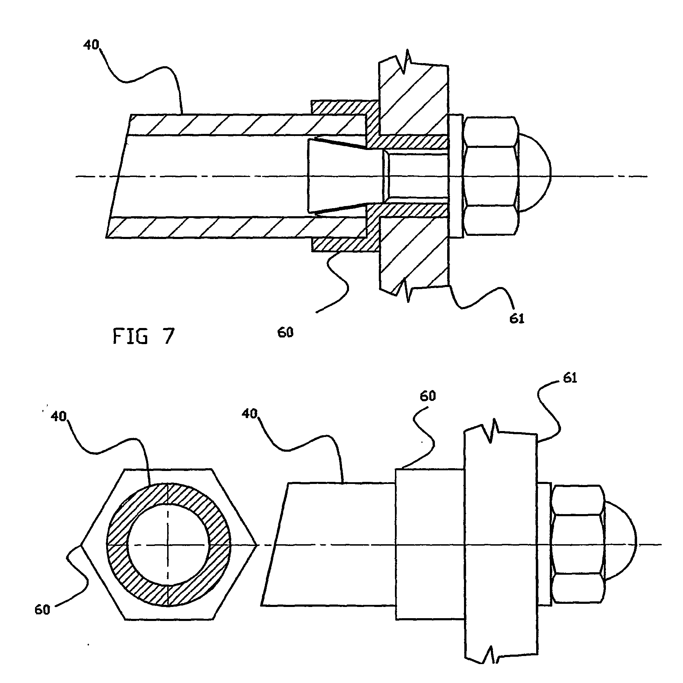

Referring to Fig 7 it is possible to fix the fastener to plate glass 61, through which a hole has been formed, by means of a thrust collar 60 with a cylindrical section to penetrate the glass as shown. The collar is preferably externally coated with plastic or similar polymer material to hold the glass in position on the fastener without causing embedding or strain in the glass.

The expansion member may be modified so as to have a passage drilled through the expansion member permitting cabling or tubing to be passed through it.

The collar may be made of plastic in order to insulate the expansion member from the body into which it is fixed, thus permitting the fastener to be used for electrical connections.

The holding force exerted by the fastener in tensile load is linearly dependent on the pre-load applied via the threaded portion and is computable to at least 20% accuracy for a given applied torque setting. The holding strength for a given preload is a function of:
a) The tensile strength of the expansion member and threaded sections.
b) The hoop strength of the material into which the collar is inserted.
c) The compressive strength of the fastener and counterface and any other adjoined parts or threaded components.
d) The frictional conditions of the fastener and parts being joined.

Release of the fastener will now be described.

The fastener is released by first slackening the nut 33 to release the pre-load in the expansion member. At this point any counterface 32 or thrust nut 45 may be removed.

Depending on the material of the collar and the application, the collar may not have developed a 'set' in service and may revert to its original unstressed form when the preload is released, thus permitting it to be lifted free.

However it may be necessary disengage the head of the expansion member from hard contact with the inner tapered bore of the collar (thereby releasing the holding force of the collar against the wall of the hole or tube bore). In this case it may be necessary to strike the expansion member 20 lightly with a hammer so as to drive it fractionally away from the collar and into the hole in a longitudinal direction. With the tapers disengaged the collar can then be removed, and if still tight it can be contracted inwardly by means of a form of pliers, thus permitting its extraction and that of the expansion member from the wall of the hole or tube bore.

Unlike a threaded fixing, where the engaged length of thread is a key factor in determining the holding strength, the present fastener is ideal for applications where a shallow or flat-bottomed hole is desirable, obviating the need for internal threading and thus reducing manufacturing and assembly cost.

In addition, the feature of accurate mating tapers and consequently linear expansion of the collar enables a single collar size to be used for a wide range of hole or bore sizes without detriment to the holding strength. The fastener can also be used on materials that are too weak to accept threading, which are relatively weak in shear strength compared with the strength of the fastener, or which would ordinarily have to be sleeved or fitted with inserts to achieve the required strength. The fastener has a particular advantage in cast iron, which is weak in shear but strong in compression.

Disassembly of the fastener is extremely fast, since, depending on the application, the fastener may be withdrawn as soon as the tension is released, unlike a conventional threaded fixing which must typically be unscrewed along the entire length of the engaged thread. Furthermore, in dismantling and overhaul situations, the same hole can be reused, without the problems of thread galling and damage that occur with a threaded arrangement.

Other advantages include the feature of the fastener being self-centring in the hole, so that if the hole or tube bore is accurately formed, perpendicularly and coaxiality of the expansion member is assured. In addition, when a tightening torque is applied to the nut, the pre-load force can be achieved more quickly than with a conventional threaded fastener.

Another advantage is that the longitudinal length of the collar is less than its outer diameter, and the longitudinal length of the collar is not greater than one and one half times the diameter of the thread of the expansion member, the fastener being thus compact.

## Claims

1. A fastener for anchoring in a hole (30) in a first component and (31) for securing a second component (32) thereto, wherein the fastener comprises:
(a) an outer expandable collar (10) having a tapered inner surface (11),
(b) an inner expansion member (20) comprising an elongate body (21) having a complementarily-tapered portion (23) for expanding the collar, and
(c) means for drawing the expansion member (20) into the collar (10),
wherein the collar (10) is mountable on the expansion member (20) so as to have an inner circumferential surface of the collar contactable with the body of the expansion member and an outer circumferential surface contactable with the hole (30),
wherein the collar (10) has an outer end face when located in the hole and an elongate slot (13) extending through a peripheral wall thereof from the outer end face of the collar (18) along at least part the length of the collar, and a lug 25 on the expansion member engages with said slot (13) in order to prevent rotation of the expansion member relative to the collar,
wherein the outer circumferential surface of the collar (10) is substantially smooth, and the outer end face of the collar (18) is flat and substantially free of surface features, wherein the tapering of the collar (10) and expansion member 20 has an included angle of 16° to 30° and wherein said angle and the outer end face of the collar are adapted to generate friction between the outer end face of the collar (18) and the second component (32) such that, as the expansion member is drawn through the collar to secure the fastener, spinning of the collar is substantially prevented, and
wherein holes or recesses (15) are provided in the outer end face of the collar (18) for facilitating retraction of the collar from a wall of the hole (30).

2. A fastener according to claim 1, wherein the slot (13) extends along the entire length of the collar (10).

3. A fastener according to claim (1), wherein the holes or recesses (15) are provided as a respective recess located adjacent each side of the slot (13).

4. A fastener according to any one of the preceding claims, wherein the collar (10) and part of the expansion member (20) are of substantially cylindrical shape.

5. A fastener according to any one of the preceding claims, wherein the collar (10) is made of ductile material.

6. A fastener according to any one of the preceding claims, wherein the collar 10 is made from a plastics material or of metal.

7. A fastener according to any one of the preceding claims, wherein the tapered portion of the collar (10) is in full contact with the expansion member (20) for more than two thirds, and preferably 80%, of the length of the collar.

8. A fastener according to any one of the preceding claims, wherein at least a portion of the inner surface of the collar (10) and/or at least a portion of the body of the expansion member (20) is provided with a low friction coating.

9. A fastener according to any one of the preceding claims, wherein the means for drawing the expansion member (20) through the collar (10) comprises a nut and a co-operating threaded portion provided on the body of the expansion member.

10. A fastener according to claim (9), wherein, in use, the threaded portion (22) of the expansion member (20) is arranged to remain outside the hole (30).

11. A fastener according to any one of the preceding claims, wherein the expansion member (20) is provided with at least one passage extending through the length of the body, thereby enabling cabling and/or tubing to be passed therethrough.

12. A fastener according to any one of the preceding claims, wherein the fastener further comprises a restraining collar (42) for reinforcing tubing into which the fastener is to be inserted.

13. A method of removably securing a fastener in a hole (30), the fastener being in accordance with any one of the preceding claims, whereby the fastener is mounted in a substantially smooth hole (30).

14. A method according to claim 13, wherein the fastener is removed from the hole by engagement with the holes or recesses of the exposed outer end face thereof to retract the collar (10) away from a wall.

## Patentansprüche

1. Ein Befestigungselement in einer Bohrung (30) in einem ersten Bauteil (31) zur Sicherung eines zweiten Bauteils (32), wobei das Befestigungselement umfasst:
(a) einen dehnbaren, äußeren Bund (10) mit einer konisch ausgebildeten inneren Oberfläche (11),
(b) einem inneren erweiterten Bauteil (20), mit einem verlängerten Körperteil (21) mit einem komplementär ausgebildeten, konischen Bauteil (23) zum Ausdehnen des Bundes (10),
(c) ein Mittel zum einziehen des erweiterten Bauteils (20) in den Bund (10),
wobei der Bund (10) an das erweiterte Bauteil (20) montierbar ist, so dass eine umlaufende innere Oberfläche mit dem Bund ausbildet wird, die in Wirkverbindung mit dem Körper des erweiterten Bauteils und eine äußere umlaufende Oberfläche steht und die mit der Bohrung (30) in Wirkverbindung bringbar ist,
wobei der Bund (10) eine längliche Aussparung (13) aufweist, die sich durch eine periphere Wand, von dem äußeren Ende des Bundes (18) her entlang erstreckt und die mindestens ein Teil der Länge des Bundes entspricht und eine Absatzkante (25) an dem erweiterten Bauteil vorgesehen ist, die mit der vorgenannten Aussparung (13) verbindbar ist, um hierdurch ein Durchdrehen des erweiterten Bauteils relativ zu dem Bund zu verhindern, wobei die äußere umlaufende Oberfläche des Bundes (10) im wesentlichen glatt ausgebildet ist und die äußere Endfläche des Bundes (18) flach und im wesentlichen frei von Oberflächenmerkmalen ausgebildet ist,
wobei die Konizität des Bundes (10) und des erweiterten Bauteils (20) einen Winkel von 16° bis 30° umfasst und wobei der vorgenannte Winkel und die äußere Endfläche des Bundes derart ausgebildet sind, um Reibung zwischen der äußeren Endfläche des Bundes (18) und der zweiten Komponente (32) zu erzeugen, so dass ein Gleiten des Bundes im wesentlichen vermieden wird, sobald das erweiterte Bauteil durch den Bund gezogen wird, um hierdurch das Befestigungselement zu sichern und
wobei Bohrungen oder Ausnehmungen (15) in der äußeren Endfläche des Bundes (18) vorgesehen sind, um ein Abrücken des Bundes von der Wand der Bohrung (30) zu erleichtern.

2. Ein Befestigungselement nach Anspruch 1, wobei die Aussparung (13) sich entlang der gesamten Länge des Bundes (10) erstreckt.

3. Ein Befestigungselement nach Anspruch 1, wobei die Bohrungen oder Aussparungen (15) jeweils Ausnehmung aufweisen, die angrenzend zu jeder Seite der Aussparung (13) angeordnet sind.

4. Ein Befestigungselement nach einem der vorangehenden Ansprüche, wobei der Bund (10) und Teile des erweiterten Bauteils (20) im Wesentlichen zylindrisch ausgebildet sind.

5. Ein Befestigungselement nach einem der vorangehenden Ansprüche, wobei der Bund (10) aus duktilem Material besteht.

6. Ein Befestigungselement nach einem der vorangehenden Ansprüche, wobei der Bund (10) aus einem Plastikmaterial oder aus Metall besteht.

7. Ein Befestigungselement nach einem der vorangehenden Ansprüche, wobei der konische Teil des Bundes (10) mit mehr als zwei dritteln, und in bevorzugter Weise mit 80% der Länge des Bundes in Vollkontakt mit dem erweiterten Bauteil (20) steht.

8. Ein Befestigungselement nach einem der vorangehenden Ansprüche, wobei wenigstens ein Bereich der inneren Oberfläche des Bundes (10) und/oder wenigstens ein Bereich des Körpers des erweiterten Bauteils (20) eine Beschichtung vorgesehen ist, die eine verringerte Reibung aufweist.

9. Ein Befestigungselement nach einem der vorangehenden Ansprüche, wobei die Mittel, zum ziehen des erweiterten Bauteils (20) durch den Bund (10), eine Nuss und ein damit in Wirkverbindung bringbares Gewindeteil umfassen und die dem Körper des erweiterten Bauteils zugeordnet sind.

10. Ein Befestigungselement nach Anspruch 9, wobei im Gebrauch das Gewindeteil (22) des erweiterten Bauteils (20) so angeordnet ist, dass es außerhalb der Bohrung (30) verbleibt.

11. Ein Befestigungselement nach einem der vorangehenden Ansprüche, wobei am erweiterten Bauteil (20) mindestens ein Durchlass vorgesehen ist, der sich über die Länge des Körpers entlang erstreckt und es hierdurch möglich ist, Verkabelungen oder Verrohrungen hindurchzuführen.

12. Ein Befestigungselement nach einem der vorangehenden Ansprüche, wobei dem Befestigungselement ein dämpfender Bund (42) zugeordnet ist, der die Verrohung, in dem das Befestigungselement eingebaut werden soll, verstärkt.

13. Ein Verfahren zur lösbaren Befestigung eines Befestigungselements in einer Bohrung (30), mit einem Befestigungselement nach einem der vorangehenden Ansprüche, wobei das Befestigungselement in einer, im Wesentlichen glatt ausgebildeten, Bohrung (30) eingebaut wird.

14. Das Verfahren nach Anspruch 13, wobei das Befestigungselement aus der Bohrung entfernt wird, indem die Lücken oder die Ausnehmungen in Eingriff mit der freiliegenden Endfläche gebracht werden, um hierdurch den Bund (10) von der Wand weg zu ziehen.

## Revendications

1. Fixation pour réaliser un ancrage dans un orifice (30) situé dans un premier élément (31) et pour fixer un second élément (32) sur celui-ci, dans laquelle la fixation comporte :
(a) un collier extensible externe (10) présentant une face interne conique (11),
(b) un élément d'extension interne (20) comportant un corps allongé (21) présentant une partie conique complémentaire (23) pour élargir le collier, et
(c) un moyen pour tirer l'élément d'extension (20) dans le collier (10),
dans laquelle le collier (10) peut être monté sur l'élément d'extension (20) afin de former une surface circonférentielle interne du collier en contact avec le corps de l'élément d'extension et une surface circonférentielle externe en contact avec l'orifice (30),
dans laquelle le collier (10) présente une face d'extrémité externe lorsque logé dans l'orifice et une fente allongée (13) se prolongeant à travers une paroi périphérique de celui-ci depuis la face d'extrémité externe du collier (18) le long d'au moins une partie de la longueur du collier, et dans laquelle une barrette (25) sur l'élément d'extension s'engage dans ladite fente (13) afin d'empêcher le pivotement de l'élément d'extension par rapport au collier,
dans laquelle la face circulaire externe du collier (10) est sensiblement lisse, et dans laquelle la face d'extrémité externe du collier (18) est plate et sensiblement exempte d'éléments en surface, dans laquelle la conicité du collier (10) et de l'élément d'extension (20) présente un angle de dégagement compris entre 16° et 30° et dans laquelle ledit angle et la face d'extrémité externe du collier sont prévus pour générer un frottement entre la face d'extrémité externe du collier (18) et le second élément (32) de sorte que, lorsque l'élément d'extension est tiré à travers le collier pour immobiliser la fixation, le pivotement du collier est sensiblement empêchée, et
dans laquelle des perçages ou des évidements (15) sont prévus dans la face d'extrémité externe du collier (18) pour faciliter la rétraction du collier hors d'une paroi de l'orifice (30).

2. Fixation selon la revendication 1, dans laquelle la fente (13) se prolonge sur toute la longueur du collier (10).

3. Fixation selon la revendication 1, dans laquelle les orifices ou les évidements (15) sont prévus comme un évidement respectif adjacent à chaque côté de la fente (13).

4. Fixation selon l'une quelconque des revendications précédentes, dans laquelle le collier (10) et une partie de l'élément d'extension (20) sont de forme sensiblement cylindrique.

5. Fixation selon l'une quelconque des revendications précédentes, dans laquelle le collier (10) est en matière ductile.

6. Fixation selon l'une quelconque des revendications précédentes, dans laquelle le collier (10) est en matière plastique ou en métal.

7. Fixation selon l'une quelconque des revendications précédentes, dans laquelle la partie conique du collier (10) est en contact complet avec l'élément d'extension (20) sur plus des deux tiers, et de préférence sur 80%, de la longueur du collier.

8. Fixation selon l'une quelconque des revendications précédentes, dans laquelle au moins une partie de la face interne du collier (10) et/ou au moins une partie du corps de l'élément d'extension (20) est pourvue d'une couche à faible frottement.

9. Fixation selon l'une quelconque des revendications précédentes, dans laquelle le moyen pour tirer l'élément d'extension (20) à travers le collier (10) comporte un écrou et une partie filetée associée prévue sur le corps de l'élément d'extension.

10. Fixation selon la revendication (9), dans laquelle, en utilisation, la partie filetée (22) de l'élément d'extension (20) est prévue pour rester en dehors de l'orifice (30).

11. Fixation selon l'une quelconque des revendications précédentes, dans laquelle l'élément d'extension (20) présente au moins un passage qui s'étend à travers la longueur du corps, permettant de ce fait à un câble et/ou à un tube de le traverser.

12. Fixation selon l'une quelconque des revendications précédentes, dans laquelle la fixation comporte en outre un collier de maintien (42) pour renforcer le tube dans lequel la fixation doit être logée.

13. Procédé d'immobilisation amovible d'une fixation dans un orifice (30), fixation selon l'une quelconque des revendications précédentes, par lequel la fixation est montée dans un orifice sensiblement lisse (30).

14. Procédé selon la revendication 13, dans lequel la fixation est retirée hors de l'orifice par engagement dans les orifices ou les évidements de la face d'extrémité externe exposée de celui-ci pour rétracter le collier (10) en éloignement de la paroi.
